# EUROPEAN PATENT SPECIFICATION

(11) **EP 3 320 799 B1**
(45) Date of publication and mention of the grant of the patent: **15.05.2019**
(21) Application number: 17200885.6
(22) Date of filing: 09.11.2017
(51) Int. Cl.: A44C 17/00, B32B 9/00

(54) **ORNAMENTAL ELEMENT AND METHOD FOR ITS MANUFACTURE**
ZIERELEMENT UND VERFAHREN ZU DESSEN HERSTELLUNG
ÉLÉMENT ORNEMENTAL ET SON PROCÉDÉ DE FABRICATION

(30) Priority: 14.11.2016 IT 201600114370
(43) Date of publication of application: 16.05.2018
(73) Proprietor: Rettore S.A.S. di Federica Rettore & C., 20123 Milano (IT)
(72) Inventor: RETTORE, Federica, 20143 MILANO (IT)
(74) Representative: De Gregori, Antonella

(56) References cited:
- DE-A1- 10 111 360
- GB-A- 2 445 147
- US-A1- 2012 103 016

## Description

The present invention relates to an ornamental element and a method for its manufacture.

In the state of the art, in the sector of gold ware, ornamental elements of various different types are known, which are generally made starting from natural materials, which may be variously combined together. Document GB2445147 discloses an ornamental element according to the preamble of claim 1.

In the technical field, there is a widespread need to have available ornamental elements, for use on their own or as a starting point for creating jewelry or jewels and the like, which are capable of using and exalting the chromatic and reflective effects in particular of semi-precious stones, preferably natural stones.

In this sense, the need is also felt to have valid alternatives available to the ornamental elements known in the state of the art, at reasonable cost and difficulty of manufacture.

It should be noted that the term "semi-precious" stones is used here to mean colored gemstones like moissanite, zircons, white quartzes, rock crystal, alexandrite, demantoid or tsavorite garnet, tanzanite, tourmaline, aquamarine and the like; the term is in any case very clear to a person skilled in the art in the sector of gold ware.

The aim of the present invention consists in providing an ornamental element that solves the above technical problem, eliminates the drawbacks, and overcomes the limitations of the known art, making it possible to meet the aforementioned demands of the market in the sector of gold ware.

Within this aim, an object of the present invention is to provide an ornamental element and a method of manufacturing an ornamental element that are relatively simple and economically competitive when compared to the known art.

This aim, and these and other objects which will become better evident hereinafter, are achieved by an ornamental element that comprises a mother-of-pearl substrate, at least one natural stone layer superimposed at least partially on the mother-of-pearl substrate, at least one metallic lamina superimposed at least partially on the natural stone layer, and at least one outer layer made of transparent or translucent natural stone.

This implementation makes it possible in fact to have an ornamental element available that has a low cost overall together with a good aesthetic effect, in addition to being an alternative to conventional ornamental elements.

Another object of the invention is a method of manufacturing such ornamental element, which comprises the steps of:
a. providing a mother-of-pearl substrate;
b. gluing, at least on part of the mother-of-pearl substrate, a layer made of natural stone;
c. gluing, at least on part of the natural stone layer, at least one metallic lamina in order to form a blank in which the mother-of-pearl substrate, the natural stone layer and the metallic lamina are coupled.

Advantageously, the method of the invention makes it possible to provide the ornamental element of the invention relatively simply and at low cost.

Further advantageous characteristics, which may or may not be considered independently of each other, are the subject matter of the appended claims which are understood to be an integral part of the present description.

Further characteristics and advantages of the invention will become better apparent from the detailed description of a preferred, but not exclusive, embodiment of an ornamental element, which is illustrated by way of non-limiting example with the aid of the accompanying drawings wherein:

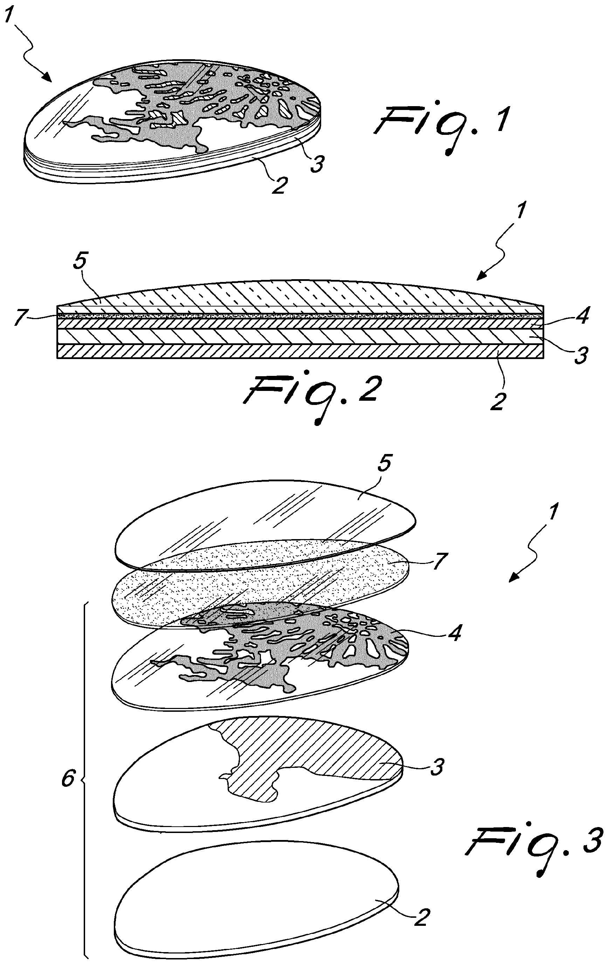

Figure 1 is a perspective view of an embodiment of an ornamental element according to the invention;
Figure 2 is a cross-sectional side view of the ornamental element in Figure 1;
Figure 3 is an exploded perspective view of the ornamental element in Figures 1 and 2.

With reference to the figures, the ornamental element according to the invention, generally designated by the reference numeral 1, comprises a mother-of-pearl substrate 2, which when the ornamental element 1 is in use is intended to constitute its rear face.

The substrate 2 in plan view can have any shape, even though in the accompanying figures it is shown with a teardrop shape; in any case, irrespective of the shape in plan view, the substrate 2 is substantially sheet-like, with two dimensions predominating with respect to the third (thickness).

At least one natural stone layer 3 at least partially overlaps the mother-of-pearl substrate 2.

In the example, the natural stone layer 3 comprises two laminas of natural stones which are variously arranged so as to cover the entire upper face of the substrate 2; in other embodiments there is only one lamina of a single natural stone, or there are laminas of different stones, or the laminas might even not completely cover the substrate 2, leaving at least some parts of it exposed.

At least one metallic lamina 4 at least partially overlaps the natural stone layer 3.

The metallic lamina 4 preferably only partially covers the natural stone layer, leaving differently contoured portions of it exposed according to requirements.

Finally, in its most general form, the element 1 comprises an outer layer 5 made of transparent or translucent natural stone which, when the ornamental element 1 is in use, is intended to constitute its front face.

The mother-of-pearl substrate 2 is glued to the natural stone layer 3 by way of a transparent adhesive, preferably a UV-cured adhesive.

Similarly, the natural stone layer 3 is glued to the metallic lamina 4 by way of a transparent adhesive, preferably a UV-cured adhesive.

The assembly of substrate 2, layer 3, and lamina 4 defines a blank 6.

In an embodiment, between the blank 6 and the outer layer 5 a layer of transparent or translucent resin 7 is interposed, which improves the diffusion of light and the brilliance of the element 1 overall and likewise creates a flat surface, transparent and glossy, which is essential for the uniform adhesion of the outer layer 5, which being made of natural stone is a non-deformable material.

The transparent or translucent resin 7 is preferably a UV-cured epoxy resin.

Turning now to the natural stone layer 3, this comprises one or more natural stone laminas, preferably with a thickness approximately greater than or equal to 1 mm.

Each lamina is preferably made of a different kind of natural stone to that of the other laminas that make up the layer 3, so as to have a distribution of colors (and stones) that meets the manufacturing requirements.

The shape in plan view of the stone laminas can also vary according to requirements and can be such as to completely or only partially cover the substrate 2.

Turning now to the metallic lamina 4, this is preferably a lamina of a precious metal, such as gold, silver or alloys thereof.

Preferably the lamina 4 is made of 18kt chased gold, both because of cost requirements and for workability, as well as for the end result.

In this case too the lamina 4 can have any shape and extent, it being possible to provide desired images or decorations or motifs, according to requirements.

The outer layer 5 has a convex outer face so as to generate advantageously a form of "lens effect", thus improving the diffusion of light which will then be reflected by the layers of the underlying blank 6.

Preferably the outer layer 5 is made of hyaline quartz with height of convexity variable from 2 mm to 3 mm and tapered on the edges to form a collar of 0.20 mm.

Theoretically, the outer layer 5 can be made of different transparent hard natural stones, in the preferred solution it is made of transparent hard stone with a cabochon or briolette cut, preferably from hyaline quartz.

The ornamental element 1 according to the invention can advantageously be used on its own, for example incorporated in a ring, a bracelet, an item of jewelry or the like, or it can be used as a blank in order to be later cut (e.g. edged) and finished at a later time.

Manufacture of the ornamental element 1 according to the invention comprises the steps of:
a. providing a mother-of-pearl substrate 2;
b. gluing, at least on part of the mother-of-pearl substrate 2, a layer made of natural stone 3;
c. gluing, at least on part of the natural stone layer 3, at least one metallic lamina 4 in order to form a blank 6 in which the mother-of-pearl substrate 2, the natural stone layer 3 and the metallic lamina 4 are coupled;
d. depositing, on the blank 6, a layer of transparent or translucent resin 7, preferably UV-cured epoxy resin, in order to create a transparent and polishable flat surface that is adapted to receive the outer layer 5;
e. causing the hardening of the layer of transparent or translucent resin 7;
f. polishing an outer face of the layer of transparent or translucent resin 7.
g. coupling, to the blank 6, at least one outer layer 5 made of transparent or translucent natural stone.

The invention, thus conceived, is susceptible of numerous modifications and variations, all of which are within the scope of the appended claims.

## Claims

1. An ornamental element (1) comprising:
- a mother-of-pearl substrate (2);
- at least one natural stone layer (3) superimposed at least partially on the mother-of-pearl substrate (2) **characterized by**:
- at least one metallic lamina (4) superimposed at least partially on the natural stone layer (3);
- at least one outer layer (5) made of transparent or translucent natural stone.

2. The ornamental element (1) according to claim 1, **characterized in that** the mother-of-pearl substrate (2) is glued to the natural stone layer (3) by way of a transparent adhesive, preferably a UV-cured adhesive, and wherein the layer of natural stone (3) is glued to the metallic lamina (4) by way of a transparent adhesive, preferably a UV-cured adhesive, in order to form a blank (6), and wherein between the blank (6) and the outer layer (5) there is an interposed layer of transparent or translucent resin (7), preferably a resin, and wherein the layer of transparent or translucent resin (7) is glued to the outer layer (5) by way of a transparent adhesive, preferably a UV-cured adhesive.

3. The ornamental element (1) according to claim 1 or 2, **characterized in that** the natural stone layer (3) comprises one or more natural stone laminas, preferably with a thickness approximately greater than or equal to 1 mm.

4. The ornamental element (1) according to one or more of the preceding claims, **characterized in that** the metallic lamina (4) is made of gold, preferably 18 carat chased gold.

5. The ornamental element (1) according to one or more of the preceding claims, wherein the outer layer (5) has a convex outer face.

6. The ornamental element (1) according to one or more of the preceding claims, **characterized in that** the outer layer (5) is made of transparent natural hard stone with a cabochon or briolette cut, preferably made of hyaline quartz, or other natural stones with similar transparency characteristics.

7. A method for manufacturing an ornamental element (1) according to one or more of the preceding claims, **characterized in that** it comprises the steps of:
a. providing a mother-of-pearl substrate (2);
b. gluing, at least on part of the mother-of-pearl substrate (2), a layer made of natural stone (3);
c. gluing, at least on part of the natural stone layer (3), at least one metallic lamina (4) in order to form a blank (6) in which the mother-of-pearl substrate (2), the natural stone layer (3) and the metallic lamina (4) are coupled;
d. coupling, to the blank (6), at least one outer layer (5) made of transparent or translucent natural stone.

8. The method according to claim 7, **characterized in that** the following steps are comprised between steps c. and d.:
e. depositing, on said blank (6), a layer of transparent or translucent hardening resin (7), preferably UV-cured epoxy resin;
f. causing the hardening of said layer of transparent or translucent resin (7);
and in which in step d. the coupling between the transparent or translucent resin layer (7) and the outer layer (5) is provided by adhesive bonding.

9. The method according to claim 8, **characterized in that** the following step is comprised between steps e. and f.:
g. polishing the outer face of said layer of transparent or translucent resin (7).

## Patentansprüche

1. Schmuckelement (1) aufweisend:
- ein Perlmuttsubstrat (2);
- zumindest eine zumindest teilweise auf das Perlmuttsubstrat (2) überlagerte Natursteinschicht (3);
- zumindest ein zumindest teilweise auf die Natursteinschicht (3) überlagerte Metallplättchen (4);
- zumindest eine aus transparentem oder transluzentem Naturstein hergestellten Außenschicht (5).

2. Schmuckelement (1) nach Anspruch 1, **dadurch gekennzeichnet, dass** das Perlmuttsubstrat (2) mittels eines transparenten Klebers, vorzugsweise eines UV-härtenden Klebers, auf die Natursteinschicht (3) geklebt ist, und wobei die Natursteinschicht (3) mittels eines transparenten Klebers, vorzugsweise eines UV-härtenden Klebers, auf das Metallplättchen (4) geklebt ist, um einen Rohling (6) zu formen, und wobei zwischen dem Rohling (6) und der Außenschicht (5) eine Schicht aus transparentem oder transluzentem Harz (7), vorzugsweise einem Harz zwischengelagert ist, und wobei die Schicht aus transparentem oder transluzentem Harz (7) mittels eines transparenten Klebers, vorzugsweise eines UV-härtenden Klebers, auf die Außenschicht (5) geklebt ist.

3. Schmuckelement (1) nach Anspruch 1 oder 2, **dadurch gekennzeichnet, dass** die Natursteinschicht (3) ein oder mehrere Natursteinplättchen, vorzugsweise mit einer Dicke von annähernd grösser oder gleich 1 mm aufweist.

4. Schmuckelement (1) nach einem oder mehreren der vorhergehenden Ansprüche, **dadurch gekennzeichnet, dass** das Metallplättchen (4) aus Gold, vorzugsweise aus 18-karätigem ziseliertem Gold hergestellt ist.

5. Schmuckelement (1) nach einem oder mehreren der vorhergehenden Ansprüche, bei welchem die Außenschicht (5) eine konvexe Außenfläche aufweist.

6. Schmuckelement (1) nach einem oder mehreren der vorhergehenden Ansprüche, **dadurch gekennzeichnet, dass** die Außenschicht (5) aus transparentem, hartem Naturstein im Cabochon- oder Brioletteschliff, vorzugsweise aus Hyalinquarz, oder aus anderen Natursteinen mit ähnlichen transparenten Eigenschaften besteht.

7. Verfahren zur Herstellung eines Schmuckelements (1) nach einem oder mehreren der vorhergehenden Ansprüche, **dadurch gekennzeichnet, dass** es folgende Schritte umfasst:
a. Bereitstellen eines Perlmuttsubstrats (2);
b. Aufkleben zumindest auf einem Teil des Perlmuttsubstrats (2), einer aus Naturstein (3) hergestellten Schicht;
c. Aufkleben zumindest auf einem Teil der Natursteinschicht (3), zumindest eines Metallplättchens (4), um einen Rohling (6) zu formen, bei welchem das Perlmuttsubstrat (2), die Natursteinschicht (3) und das Metallplättchen (4) gekoppelt sind;
d. Ankoppeln zumindest einer aus transparentem oder transluzentem Naturstein hergestellten Außenschicht (5) an den Rohling (6).

8. Verfahren nach Anspruch 7, **dadurch gekennzeichnet, dass** zwischen den Schritten c. und d. folgende Schritte enthalten sind:
e. Aufbringen einer Schicht aus transparentem oder transluzentem, härtbarem Harz (7), vorzugsweise UV-härtendem Epoxidharz auf diesen Rohling (6);
f. Bewirken der Härtung dieser Schicht aus transparentem oder transluzentem Harz (7); und wobei in Schritt d. die Kopplung zwischen der transparenten oder transluzenten Harzschicht (7) und der Außenschicht (5) durch Verbundhaftung bereitgestellt wird.

9. Verfahren nach Anspruch 8, **dadurch gekennzeichnet, dass** zwischen den Schritten e. und f. folgender Schritt enthalten ist:
g. Polieren der Außenfläche dieser Schicht aus transparentem oder transluzentem Harz (7).

## Revendications

1. Élément décoratif (1) comprenant :
- un substrat de nacre (2) ;
- au moins une couche de pierre naturelle (3) superposée au moins partiellement sur le substrat de nacre (2) ;
- au moins une feuille métallique (4) superposée au moins partiellement sur la couche de pierre naturelle (3) ;
- au moins une couche extérieure (5) en pierre naturelle transparente ou translucide.

2. Élément décoratif (1) selon la revendication 1, **caractérisé en ce que** le substrat de nacre (2) est collé à la couche de pierre naturelle (3) au moyen d'un adhésif transparent, de préférence un adhésif durci par UV, et dans lequel la couche de pierre naturelle (3) est collée sur la feuille métallique (4) au moyen d'un adhésif transparent, de préférence un adhésif durci par UV, afin de former une ébauche (6), et dans lequel, entre l'ébauche (6) et la couche extérieure (5), se trouve une couche intercalée de résine transparente ou translucide (7), de préférence une résine, et dans lequel la couche de résine transparente ou translucide (7) est collée à la couche extérieure (5) au moyen d'un adhésif transparent, de préférence un adhésif durci par UV.

3. Élément décoratif (1) selon la revendication 1 ou 2, **caractérisé en ce que** la couche de pierre naturelle (3) comprend une ou plusieurs couches de pierre naturelle, de préférence d'une épaisseur approximativement supérieure ou égale à 1 mm.

4. Élément décoratif (1) selon une ou plusieurs des revendications précédentes, **caractérisé en ce que** la feuille métallique (4) est en or, de préférence en or de 18 carats.

5. Élément décoratif (1) selon une ou plusieurs des revendications précédentes, dans lequel la couche extérieure (5) présente une face extérieure convexe.

6. Élément décoratif (1) selon une ou plusieurs des revendications précédentes, **caractérisé en ce que** la couche extérieure (5) est faite d'une pierre dure naturelle transparente, taillée en cabochon ou briolette, de préférence à base de quartz hyalin, ou d'autres pierres naturelles aux caractéristiques de transparence similaires.

7. Procédé de fabrication d'un élément décoratif (1) selon une ou plusieurs des revendications précédentes, **caractérisé en ce qu'il** comprend les étapes consistant à :
a. disposer d'un substrat de nacre (2) ;
b. coller, au moins sur une partie du substrat de nacre (2), une couche de pierre naturelle (3) ;
c. coller, au moins sur une partie de la couche de pierre naturelle (3), au moins une feuille métallique (4) afin de former une ébauche (6) dans laquelle le substrat de nacre (2), la couche de pierre naturelle (3) et la feuille métallique (4) sont couplées ;
d. coupler, à l'ébauche (6), au moins une couche extérieure (5) faite de pierre naturelle transparente ou translucide.

8. Procédé selon la revendication 7, **caractérisé en ce que** les étapes suivantes sont comprises entre les étapes c. et d. :
e. déposer, sur ladite ébauche (6), une couche de résine durcissante transparente ou translucide (7), de préférence une résine époxy durcie par UV ;
f. provoquer le durcissement de ladite couche de résine transparente ou translucide (7) ;
et dans lequel à l'étape d., le couplage entre la couche de résine transparente ou translucide (7) et la couche extérieure (5) est réalisé par collage.

9. Procédé selon la revendication 8, **caractérisé en ce que** l'étape suivante est comprise entre les étapes e. et f. :
g. polir la face extérieure de ladite couche de résine transparente ou translucide (7).
